# EUROPEAN PATENT SPECIFICATION

(11) **EP 0 311 410 B1**
(45) Date of publication and mention of the grant of the patent: **10.02.1993**
(21) Application number: 88309338.7
(22) Date of filing: 06.10.1988
(51) Int. Cl.: H01M 10/40, H01M 10/48, H01M 4/58, G02F 1/15, H01M 4/96, G02F 1/153, G02F 1/155

(54) **Secondary battery**
Sekundärbatterie
Batterie secondaire

(30) Priority: 06.10.1987 JP 253365/87; 06.10.1987 JP 253366/87
(43) Date of publication of application: 12.04.1989
(73) Proprietor: SHARP KABUSHIKI KAISHA, Osaka 545 (JP)
(72) Inventor: Yoshimoto, Yoshikazu, Tenri-shi Nara (JP); Wada, Hiroshi D-32-504, 1-1994-3, Nara-shi Nara (JP); Suzuki, Tomonari, Kashihara-shi Nara (JP); Yoshida, Masaru, Ikoma-gun Nara (JP); Nakajima, Shigeo, Nara-shi Nara (JP)
(74) Representative: Brown, Kenneth Richard

(56) References cited:
- EP-A- 0 095 973
- EP-A- 0 239 410
- EP-A- 0 267 791
- WO-A-80/00880
- DE-C- 2 433 044
- CHEMICAL ABSTRACTS, vol. 91, no. 10, September 1979, page 142, abstract no. 76889w, Columbus, Ohio, US; & JP-A-79 60 425 (JAPAN STORAGE BATTERY CO., LTD) 15-05-1979
- PATENT ABSTRACTS OF JAPAN, vol. 8, no. 99 (E-243)[1536], 10th May 1984; & JP-A-59 16 283 (MATSUSHITA DENKI SANGYO K.K.) 27-01-1984
- SYNTHETIC METALS, vol. 3, 1981, pages 27-39, Elsevier Sequoia S.A., Lausanne, CH; P. PFLUGER et al.: "Aspects of alkali metal intercalation and deinter-calation in highly oriented pyrolytic graphites"

## Description

The present invention relates to a secondary battery capable of displaying visually its state of charge and discharge.

Portable electronic apparatuses are now widely used and various secondary batteries have been developed for them and have recently become available. However, practical problems still arise with such batteries. One essential problem is that it is impossible to learn directly the state of charge and discharge of the secondary battery. Although the charge and discharge state can be determined by suitable measuring apparatus, the necessary use of such apparatus is not always convenient.

In order to solve this problem, it has been proposed to detect the charge and discharge state of the secondary battery by means of a color change thereto (See, for example, JP-A No. 59-16283).

However, this entails the use of a display electrode in addition to the essential elements of the secondary battery, using a material such as WO₃ or TiO₂ the color of which is changed by a reversible electro-chemical reaction. As a result, the battery structure becomes very complicated, its production process has disadvantages and it becomes bulky.

In contrast, electrochromic devices which assume a specific color due to a reversible electro-chemical reaction are already well known and are applicable for such display devices. More specifically, there is already known an electrochromic device which utilizes color change due to changes in the stage structure of a graphite intercalation compound.

As is well known, graphite has a layered structure capable of forming an intercalation compound between adjacent layers by intercalating various atoms and/or molecules. The intercalation compound assumes a color dependent upon the type of the inserted atom or molecule and the stage structure thereof.

In Appl. Phys. Lett. 35 (1978) p 771 and Synth. Met. 3 (1981) p 27, P. Pfluger et al. proposed and tested an electrochromic display device which utilizes a color change caused by a reversible change in the stage structure of lithium-graphite intercalation compound.

In that display device, HOPG (highly oriented pyrolytic graphite produced by Union Carbide Corp.) is used for the working electrode, metalic lithium is used for the counter electrode and an organic solvent (liquid electrolyte) such as dimethylsulfoxide, or Li₃N as a solid ion conductor is used for the ion conduction layer which serves as an ion transport layer for lithium ions.

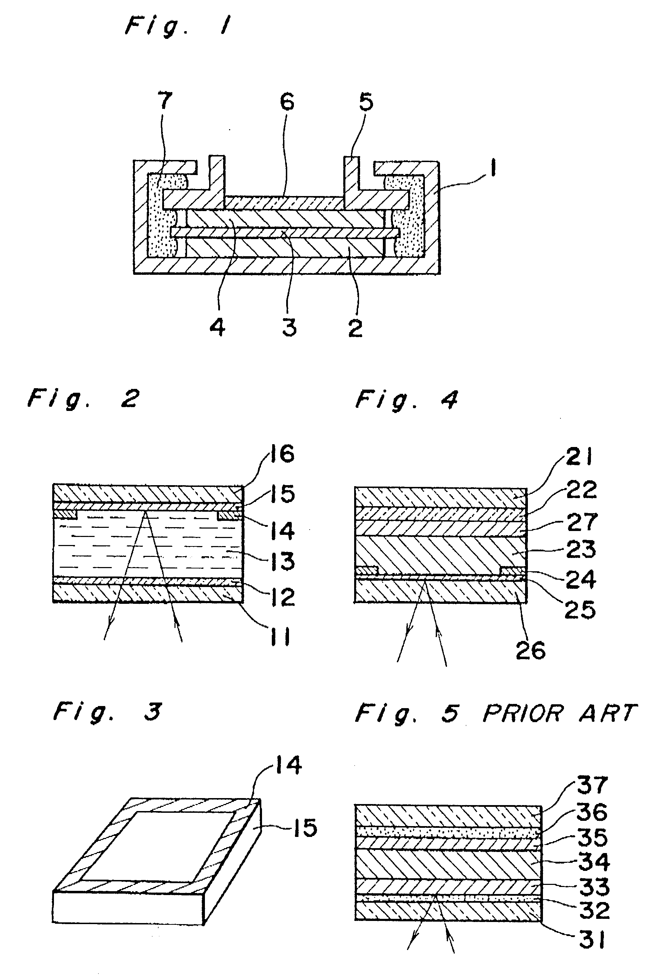

Fig. 5 of the accompanying drawings shows an example of the electrochromic display device manufactured for trial by P. Pfluger et al. wherein Li₃N was used for the ion conduction layer.

This device has such a structure that a transparent electrode 32, a working electrode 33, an ion conduction layer 34, a counter electrode 35, an electrode 36 and a glass substrate 37 are formed stacked on a glass substrate 31. When a voltage is applied between the two electrodes 32 and 36, lithium ions are implanted from the counter electrode 35 to the working electrode 33 through the ion conduction layer 34 or discharged from the latter electrode to the former electrode to make the color of the working electrode 33 change reversibly. If the electrode 36 is made of a transparent material, the color change of the working electrode can be observed through both of the glass substrates 31 and 37.

However, this type of electrochromic display device using HOPG for the working electrode has some disadvantages. First, the organic solvent ion conduction layer is of inferior stability although it exhibits a quick response of about 0.2 second. Second, the HOPG used for the working electrode is apt to take up into its layered structure not only lithium atoms but also molecules of the organic solvent used for the ion conduction layer 34, because it has a highly crystalline structure and a high degree of orientation. The size of each molecule of the organic solvent taken into the layered structure causes the layer spacing of the HOPG to enlarge considerably and, due to this, the crystalline structure of the HOPG is often destroyed, resulting in instability of the display device.

In contrast, the use of Li₃N as a solid ion conductor solves the instability problem but the response speed is lowered considerably.

Further, with this particular structure of the display device, the color change of the graphite intercalation compound can be observed only from a side opposite to that in contact with the ion conduction layer 34 of the graphite working electrode 33. Accordingly, it cannot be observed until lithium atoms inserted from the side in contact with the ion conduction layer have diffused through the graphite working electrode 33 to the opposite side. This is why the response speed of this type of devices is so low.

In order to improve the response speed, it is necessary to make the graphite working electrode thinner, to an order of several hundreds Å. Although it is possible to thin HOPG by exfoliation, it is difficult to obtain a uniform thickness of the graphite thin film of several hundreds Å thickness. Further, since this type of the display device necessitates complicated processes for forming it, it is not suitable for industrial production.

Also, the cost of HOPG increases since it is produced by a difficult heat treatment under high pressure at a temperature above 2,000 °C. This precludes wide use of this type of display device since various cheaper display devices are available.

The present invention seeks to provide a secondary battery which is capable of displaying its state of charge and discharge through the active material of battery serving as the display, and to provide an electrochromic display device having both a stable and a rapid response function.

In accordance with the invention, there is now provided a secondary battery which comprises a casing which contains a positive electrode, a negative electrode and a separator containing electrolyte situated between the positive and negative electrodes, either of the positive and negative electrodes comprising as the active electrode material a pyrolytic carbonaceous material obtained by thermal decomposition of a hydrocarbon at a temperature of about 1,000°C, characterised in that the pyrolytic carbonaceous material forms an intercalation compound the structure of which varies in response to changes in voltage between the electrodes and the color of which varies in response to the structure, and that the casing has a transparent window to enable the color of that electrode to be observed as an indication of the state of charge of the battery.

There is provided also an electrochromic display device which comprises a first electrode and as a working electrode an intercalation compound of a pyrolytic carbonaceous material the structure of which varies in response to changes in voltage between the electrodes and the color of which varies in response to the structure, characterised in that the pyrolytic carbonaceous material is of uniform thickness and is obtained by thermal decomposition of a hydrocarbon at a temperature of about 1,000°C.

The present invention is described below in greater detail with reference to the accompanying drawings in which:
Fig. 1 is a cross-sectional view of a secondary battery according to the present invention;
Fig. 2 is a schematic cross-sectional view of an electrochromic display device according to the present invention;
Fig. 3 is a schematic perspective view for showing the collector formed on the working electrode of the electrochromic display device shown in Fig. 2;
Fig. 4 is a schematic cross-sectional view of another electrochromic display device according to the present invention; and
Fig. 5 is a schematic cross-sectional view of a conventional electrochromic display device.

Referring first to Fig. 1 of the drawings, the secondary battery includes a casing 1 of an electrically conductive material accommodating in sequence a positive electrode 2, a separator 3 and a negative electrode 4. The positive electrode 2 is made of Cr₃O₈. The separator 3 contains propylene carbonate into which 1 Mol. of lithium perchlorate is dissolved as an electrolyte. The negative electrode 4 is made of a carbonaceous material deposited on a nickel substrate, produced by low temperature thermal decomposition from the vapour of benzene, propane, or their derivatives. On the negative electrode 4, an annular terminal 5 is formed projecting from the aperture in the casing 1, and a sealing element 6 is formed on the circular area of the negative electrode 4 defined by the terminal 5. The sealing element 6 is made of a transparent material such as glass so that any color change of the negative electrode 4 can be observed through it. The sealing element 6 therefore serves as a window for observing the color change.

Further, an insulating packing 7 is inserted around the inner periphery of the casing 1 so as to insulate the separator 3, the negative electrode 4 and the negative electrode terminal 5 from the casing 1.

It is to be noted that the charge collection effect is greatly enhanced by vapour-depositing a transparent electrode such as In₂O₃ doped with SnO₂ on the surface of the sealing element 6 contacting the negative electrode 4.

Also, it is possible to make the sealing element 6 thinner when a transparent electrically conductive film of, for example, polydiodo carbazole doped with bromine is used therefor.

A secondary battery manufactured for test purposes according to the above-described preferred embodiment has a charge and discharge capacity of 10 mAh. The negative electrode 4 assumes a distinct golden color in the charged state.

The color of the negative electrode 4 changes to blue after about five hours from starting discharge at a current of 1 mA and into blue-black after about eight hours and, after about ten hours, into pure black. Thereafter, when the secondary battery has been fully charged, the negative electrode assumes a distinct golden color again.

The capacity of the battery and the clarity of color change are as good even after 500 charge - discharge cycles at a current of 1 mA.

Fig. 2 shows an example of an electrochromic display device according to the present invention.

The device comprises a window element 11 of quartz glass, a transparent electrode 12 formed on the window element 11, an ion conduction layer 13 of a liquid electrolyte, a collector frame 14, a working electrode 15 and another window element 16 of quartz glass.

The organic solvent used for the ion conduction layer 13 is dimethylsulphoxide and, as the transparent electrode 12, indium-tin oxide is used.

The working electrode 15 is formed on the window element 16 by thermal decomposition of benzene at a temperature of about 1,000 °C according to the CVD (chemical vapour deposition) method. The pyrolytic carbon film deposited on the other surface of the window element 16 is removed so that any color change of the working electrode 15 can be observed directly.

As shown in Fig. 3, the collector frame 14 of nickel is arranged on the working electrode 15.

Lithium atoms are implanted into the pyrolytic carbonaceous film forming the working electrode 15 so as to have the component of the first stage. After implanting lithium atoms, all of elements are assembled to form an electrochromic display device.

When a voltage of (-3) V is applied between the electrodes 12 and 15, the working electrode 15 assumes the golden color of lithium-graphite intercalation compound (C₆Li) of the first stage and, when a voltage of (-1.5) V is applied, it assumes a blue color of that of the second stage (C₁₂Li). The response time interval in the color change is 0.2 second and the device shows a stable display function after changing color 8 million times.

The pyrolytic carbonaceous material is obtained by the thermal decomposition of a hydrocarbon compound at a temperature of about 1,000 °C and is a collection of microcrystals having a graphite structure. This carbonaceous material is distinct from the pyrolytic graphite such as HOPG having a well defined graphite crystalline structure.

The graphite microcrystals usually have a random arrangement but use of the CVD method properly controlled causes deposition conditions to improve the orientation between the microcrystals. This results in a pyrolytic carbonaceous material having a high orientation such that randomness in the direction of the C-axis is ± 45°.

The pyrolytic carbonaceous material forms an intercalation compound by taking up relatively small atomic species such as lithium between its layers, exhibiting changes in its stage structure and in its color similar to HOPG. More especially, the pyrolytic carbonaceous material has a diffusion speed of atomic species in its thin film as fast as that of HOPG.

Small atomic species such as lithium atoms are diffused into graphite not only between layers of the graphite microcrystals but also through passages defined by lattice defects formed in the graphite crystal. The pyrolytic carbonaceous material has many more lattice defects compared with pyrolytic graphite such as HOPG and, therefore, is more suitable for the insertion of small atomic species.

In contrast large molecules such as those of an organic solvent diffuse into graphite only through paths defined between layers of microcrystals in such a manner that they travel from one microcrystal to an adjacent one. Accordingly, the intercalation compound having large insertion species is hardly formed in the present pyrolytic carbonaceous material in which the orientation between adjacent microcrystals is inferior and many boundaries are formed among microcrystals.

Although the pyrolytic carbonaceous material has a high degree of orientation as a pyrolytic carbon, it has a lesser degree of orientation when compared with HOPG (which has a randomness in the direction of the C-axis of ± 1°) and microcrystalline grains of about 100 Å radius which is far smaller than the radius of about 1 µm in HOPG. Thus, the insertion of large molecules such as those of an organic solvent never occurs in the present carbonaceous material. Therefore, the color change can be stabilized since only small atomic species such as lithium atoms contribute to the color change.

Also, the color of the negative electrode 4 is sensitive to the voltage between the two electrodes. Thus, the charge and discharge state of the secondary battery is easily detected by observing the color of the negative electrode 4 through the window 6.

Fig. 4 shows another example of an electrochromic display device according to the present invention.

The device comprises a glass substrate 21, a transparent electrode 22, a lithium electrode 27 formed on the electrode 22 as one of the counter electrodes, an ion conduction layer 23 of Li₃N as a solid electrolyte, a collector 24, a working electrode 25 and another glass substrate 26.

The working electrode 25 is formed according to the same method described above with reference to Fig. 2. The color change of the working electrode 25 is observed through the glass substrate 26.

The electrochromic display device shows substantially the same color change as that described above with reference to Fig. 2.

The response time interval in the color change is 0.3 second.

In summary, the electrochromic display device according to the present invention shows a quick color response depending upon to an applied voltage between two electrodes.

Further, it exhibits a stable display function since only small atomic species contribute to the color change of the working electrode.

## Claims

1. A secondary battery which comprises a casing (1) which contains a positive electrode (2), a negative electrode (4) and a separator containing electrolyte situated between the positive and negative electrodes, either of the positive and negative electrodes comprising as the active electrode material a pyrolytic carbonaceous material obtained by thermal decomposition of a hydrocarbon at a temperature of about 1,000°C, characterised in that the pyrolytic carbonaceous material forms an intercalation compound the structure of which varies in response to changes in voltage between the electrodes and the color of which varies in response to the structure, and that the casing (1) has a transparent window (6) to enable the color of that electrode to be observed as an indication of the state of charge of the battery.

2. A secondary battery according to claim 1, wherein the hydrocarbon is selected from benzene, propane and their derivatives.

3. An electrochromic display device which comprises a first electrode (12,22) and as a working electrode (15,25) an intercalation compound of a pyrolytic carbonaceous material the structure of which varies in response to changes in voltage between the electrodes and the color of which varies in response to the structure, characterised in that the pyrolytic carbonaceous material is of uniform thickness and is obtained by thermal decomposition of a hydrocarbon at a temperature of about 1,000°C.

4. An electrochromic display device according to claim 3, wherein the hydrocarbon is selected from benzene, propane and their derivatives.

## Patentansprüche

1. Sekundärbatterie, umfassend:
eine Ummantelung (1), die eine positive Elektrode (2), eine negative Elektrode (4) und einen Elektrolyt enthaltenden Separator, der sich zwischen den positiven und negativen Elektroden befindet, enthält, wobei jede der positiven und negativen Elektroden als das aktive Elektrodenmaterial ein pyrolytisches, kohlenstoffhaltiges Material umfaßt, das durch thermische Zersetzung von einem Kohlenwasserstoff bei einer Temperatur von etwa 1000°C gewonnen wird, **dadurch gekennzeichnet,** daß das pyrolytische, kohlenstoffhaltige Material eine Einlagerungsverbindung bildet, deren Struktur sich als Reaktion auf Spannungsänderungen zwischen den Elektroden verändert, und deren Farbe sich als Reaktion auf die Struktur verändert, und daß die Ummantelung (1) ein durchsichtiges Fenster (6) aufweist, so daß die Farbe dieser Elektrode als eine Anzeige des Ladungszustands der Batterie beobachtet werden kann.

2. Sekundärbatterie nach Anspruch 1, bei welcher der Kohlenwasserstoff aus der Benzol, Propan und deren Derivaten umfassenden Gruppe gewählt ist.

3. Elektrochrome Anzeigeeinrichtung, umfassend:
eine erste Elektrode (12, 22) und als eine Arbeitselektrode (15, 25) eine Einlagerungsverbindung aus einem pyrolytischen, kohlenstoffhaltigen Material, dessen Struktur sich als Reaktion auf Änderungen in der Spannung zwischen den Elektroden verändert und deren Farbe sich als Reaktion auf die Struktur verändert, **dadurch gekennzeichnet,** daß der pyrolytische, kohlenstoffhaltige Material von gleichmäßiger Dicke ist und durch thermische Zersetzung eines Kohlenwasserstoffs bei einer Temperatur von etwa 1.000° C gewonnen worden ist.

4. Elektrochrome Anmzeigeeinrichtung nach Anspruch 3, bei welcher der Kohlenwasserstoff aus der Benzol, Propan und deren Derivaten umfassenden Gruppe gewählt ist.

## Revendications

1. Batterie secondaire comprenant un boîtier (1) qui renferme une électrode positive (2), une électrode négative (4) et un séparateur Contenant de l'électrolyte situé entre les électrodes positive et négative, l'une ou l'autre des électrodes positive et négative comportant, en tant que matière d'électrode active, une matière carbonée pyrolytique obtenue par la décomposition thermique d'un hydrocarbure à une température d'environ 1000°C, caractérisée en ce que la matière carbonée pyrolytique forme un composé d'intercalation dont la structure varie en réponse aux modifications de la tension entre les électrodes et dont la couleur varie en fonction de la structure, et en ce que le boitier (1) présente une fenêtre transparente (6) permettant d'observer la couleur de ladite électrode qui permet de fournir une indication de l'état de la charge de la batterie.

2. Batterie secondaire selon la revendication 1, dans laquelle l'hydrocarbure est sélectionné parmi le benzène, le propane et leurs dérivés.

3. Dispositif d'affichage électrochromique comprenant une première électrode (12, 22) et, en tant qu'électrode de travail (15, 25), un composé d'intercalation d'une matière carbonée pyrolytique dont la structure varie en réponse à des modifications de la tension présente entre les électrodes, et dont la couleur varie en fonction de la structure, caractérisé en ce que la matière carbonée pyrolytique est d'une épaisseur uniforme et est obtenue par la décomposition thermique d'un hydrocarbure à une température d'environ 1000 °C.

4. Dispositif d'affichage électrochromique selon la revendication 3, dans lequel l'hydrocarbure est sélectionné parmi le benzène, le propane et leurs dérivés.
